# EUROPEAN PATENT SPECIFICATION

(11) **EP 2 413 210 B1**
(45) Date of publication and mention of the grant of the patent: **21.01.2015**
(21) Application number: 10176285.4
(22) Date of filing: 10.09.2010
(51) Int. Cl.: G05B 19/042, H01R 13/71

(54) **Module interfacing**
Modulschnittstellen
Interface pour module

(30) Priority: 29.07.2010 US 368695 P
(43) Date of publication of application: 01.02.2012
(73) Proprietor: Rockwell Automation Limited, Milton Keynes Buckinghamshire MK11 3DR (GB)
(72) Inventor: Jones, Ian, West Mersea, Essex CO5 8RS (GB); Meagher, Thomas, Houston,, TX 77084 (US)
(74) Representative: Roberts, Peter David

(56) References cited:
- EP-A1- 2 085 839
- JP-A- 5 191 065
- JP-A- 6 061 663
- US-A1- 2006 251 187

## Description

### BACKGROUND

### a. Field of the Invention

This invention relates to improvements in interfaces between modules and is particularly applicable for use in an Industrial Process Control System suitable for:
Emergency Shutdown systems
Critical process control systems
Fire and Gas detection and protection systems
Rotating machinery control systems
Burner management systems
Boiler and furnace control systems
Distributed monitory and control systems

Such control systems are applicable to many industries including oil and gas production and refining, chemical production and processing, power generation, paper and textile mills and sewage treatment plants.

### b. Related Art

In industrial process control systems, fault tolerance is of utmost importance. Fault tolerance is the ability to continue functioning safely in the event of one or more failures within the system.

Fault tolerance may be achieved by a number of different techniques, each with its specific advantages and disadvantages

An example of a system which provides redundancy is a Triple Modular Redundancy (TMR) system. Using TMR, critical circuits are triplicated and perform identical functions simultaneously and independently. The data output from each of the three circuits is voted in a majority-voting circuit, before affecting the system's outputs. If one of the triplicated circuits fails, its data output is ignored. However, the system continues to output to the process the value (voltage, current level, or discrete output state) that agrees with the majority of the functional circuits. TMR provides continuous, predictable operation.

However, TMR systems are expensive to implement if full TMR is not actually a requirement, and it is desirable to utilise an architecture which provides flexibility so that differing levels of fault tolerance can be provided depending upon specified system requirements.

Another approach to fault tolerance is the use of hot-standby modules. This approach provides a level of fault tolerance whereby the standby module maintains system operation in the event of module failure. With this approach there may be some disruption to system operation during the changeover period if the modules are not themselves fault-tolerant.

Fault tolerant systems ideally create a Fault Containment Region (FCR) to ensure that a fault within the FCR boundary does not propagate to the remainder of the system. This enables multiple faults to co-exist on different parts of a system without affecting operation.

Fault tolerant systems generally employ dedicated hardware and software test and diagnostic regimes that provide very fast fault recognition and response times to provide a safer system.

Safety control systems are generally designed to be 'fail-operational/fail-safe'. Fail operational means that when a failure occurs, the system continues to operate: it is in a fail-operational state. The system should continue to operate in this state until the failed module is replaced and the system is returned to a fully operational state.

An example of fail safe operation occurs, for example if, in a TMR system, a failed module is not replaced before a second failure in a parallel circuit occurs, the second failure should cause the TMR system to shut down to a fail-safe state, It is worth noting that a TMR system can still be considered safe, even if the second failure is not failsafe, as long as the first fault is detected and communicated, and is itself failsafe.

It is desirable if the insertion and removal of modules and backplanes from live systems can be achieved without requiring the use of special connectors with staggered pin lengths. One embodiment of this invention provides a physical interface which allows safe live insertion and removal of modules and backplanes.

One problem in systems where replicated input/output modules receive commands from a processor in parallel over a processor module command bus is that if the power supply were to fall or short-circuit on one of the I/O module receivers, then it has the potential to drag down the processor module command bus for all of the other I/O modules to which it is connected. One embodiment of this invention provides a processor module command to backplane interface which prevents such an occurrence.

Another problem with known systems is the detection of input path channel independence (sometimes called cross-wired) circuit failures where there is only a single processor available and hence no cross comparison is possible. One embodiment of this invention provides a processor module to I/O module interface which aids the detection of channel independence failures under these circumstances.

A fourth problem is to reliably reject noise and cross talk from a signal received by a processor module. One embodiment of this invention provides a processor module to I/O module interface with improved noise and cross talk detection capabilities.

EP 2085839 relates to a method and apparatus for interconnecting modules in an industrial process control system. A plurality of processors and a plurality of input/output modules in which each processor has a unidirectional command line which is connected to a plurality of input output modules is provided. Each input output module has a unidirectional response line which is connected to a plurality of processors.

US2006/025187 relates to a hysteresis receiver containing two inverters and a logic controller.

JP5191065 relates to a method to enable a connector used for connecting a substrate with a back board to be protected against connection failure and to protect the substrate against damage.

JP6061662 relates to a connection confirming apparatus for a circuit board comprising a backboard.

### SUMMARY OF THE INVENTION

According to the invention there is provided an apparatus for industrial process control comprising a plurality of assemblies in communication with one another via a backplane portion, each assembly having a physical module interface comprising a plurality of input/output pins for connecting to the backplane portion and in which the assemblies use one or more differential signals to communicate with one another and in which the backplane portion is arranged to connect an input signal to two input pins on a physical module interface connecting to an assembly to provide a first and second copy of the input signal to said assembly.

In a preferred embodiment the assembly comprises a module interface for processing said first and second copy of an input signal, the module interface comprising: a first threshold detector receiving said first copy of the input signal and arranged to output a signal in dependence upon a first threshold; a second threshold detector receiving said second copy of the input signal and arranged to output a signal in dependence upon a second threshold; and a bit sampler arranged to receive and sample the output of the first and second threshold detectors and to provide a signal dependent thereon for subsequent decoding.

The assembly may further comprise an interface for processing input signals the interface comprising means for biasing the input signal to within a predetermined range. The means for biasing may comprise a pair of silicon diodes.

Advantageously the plurality of input/output pins may be arranged in a longitudinal group and comprising a first seat detect pin at a first end of the longitudinal group and a second set detect pin at a second end of the longitudinal group.

In a preferred embodiment each seat detect pin is pulled up to a predetermined voltage when the assembly is disconnected from the backplane and in which each seat detect pin connects to 0V on the backplane when the assembly is connected to the backplane.

Preferably the longitudinal group further comprises a system power supply pin and a system power return pin at the first end of the longitudinal group and a system power supply pin and a system power return pin at the second end of the longitudinal group.

### BRIEF DESCRIPTION OF THE DRAWINGS

Embodiments of the invention will now be described, by way of example only, with reference to the accompanying drawings, in which:
Figure 1 is an illustration showing the architecture of a distributed industrial process control system which uses the apparatus and method of the present invention;
Figure 2 illustrates schematically a controller of the industrial process control system illustrated in Figure 1;
Figure 3 illustrates a possible configuration of a controller;
Figure 4 shows various options for an input assembly and output assembly of Figure 3
Figure 5 shows one possible configuration implementing a two out of three voting strategy;
Figure 6 illustrates a second possible configuration for a two out of three voting strategy;
Figure 7 is a schematic illustration of interconnections between a plurality of processors and a plurality of input/output modules;
Figure 8 illustrates a portion of the arrangement shown in Figure 7 showing the module interfaces in more detail;
Figure 9 illustrates an improved arrangement for a geometrical assignment of pin functionality for a physical module interface;
Figure 10 illustrates a portion of an improved backplane to module interface;
Figure 11 illustrates a portion of an improved backplane to module interface;
Figure 12 illustrates the backplane processor interface of Figure 11 in more detail; and
Figure 13 illustrates example signals at various points within the interface shown in Figure 12.

### DETAILED DESCRIPTION

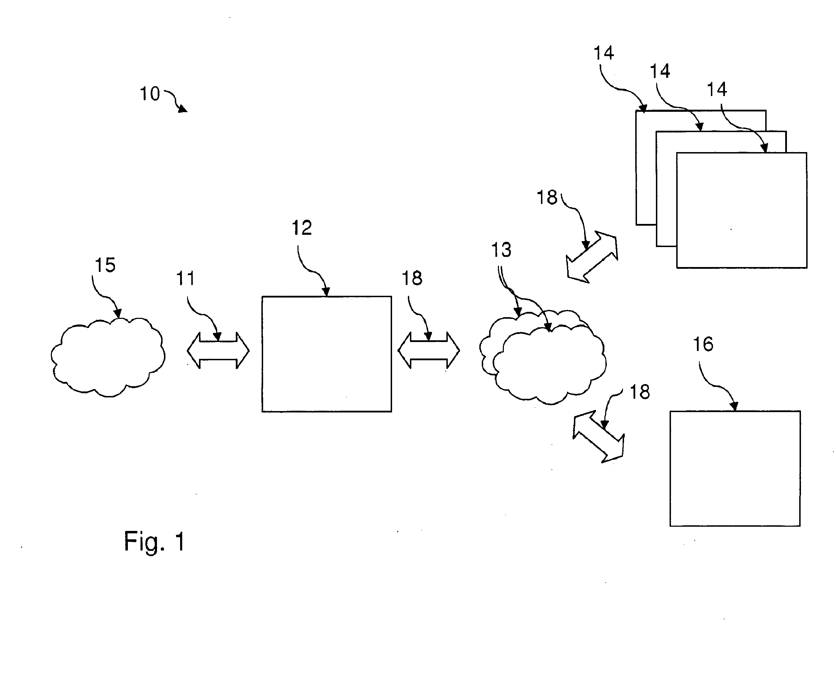

In the Industrial Process Control System shown in Figure 1, a distributed architecture is designed to be used in different SIL (safety integrity level) environments, so that if a high SIL is required it can be provided, but if a low SIL is all that is needed the system can be reduced in complexity in order to reduce unnecessary extra costs.

An exemplary Industrial Process Control System 10, comprises a workstation 12, one or more controllers 14 and a gateway 16. The workstation 12 communicates with the controllers 14 and the gateway 16 via Ethernet connections 18 to one or more control networks 13. Multiple Ethernet connections 18 provide redundancy to improve fault tolerance. The workstation 12 may be connected via a conventional Ethernet connection 11 to another external network 15.

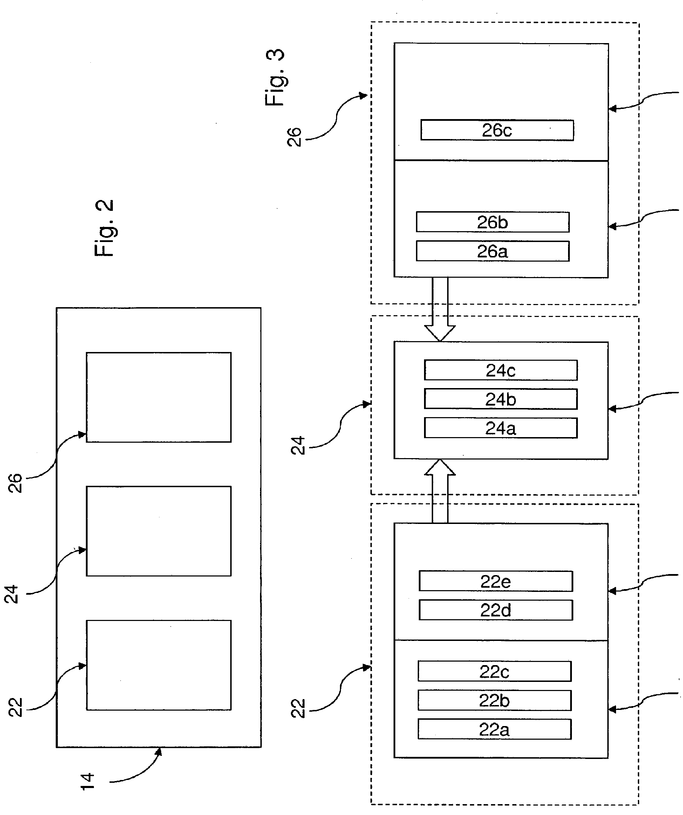

A controller 14 will now be described in more detail with reference to Figures 2 and 3.

Figure 2 illustrates a schematic diagram of the controller 14 comprising an input assembly 22, a processor assembly 24 and an output assembly 26. In this schematic illustration the input assembly 22 and output assembly 26 are on different backplanes but they may equally well share a single backplane.

Assemblies 22, 24, 26 are created from one or more communications backplane portions which have three slots to accommodate up to three modules together with termination assemblies which have one, two or three slots, and which interface to field sensors and transducers. A termination assembly may straddle two contiguous backplane portions. A module comprises a plug in card with multiple connectors for plugging onto a communications backplane and a termination assembly.

It will be appreciated that having three slots in a communications backplane portion is one design option and other design options with greater (or fewer) slots are possible without departing from the scope of the invention as defined in the appended claims.

Figure 3 illustrates a possible physical configuration of the controller 14. In this embodiment of the invention, the input assembly 22, output assembly 26 and processor assembly 24 are physically separated from one another by grouping the modules of different types onto separate communications backplanes.

In the example shown, the input assembly 22 comprises two communications backplane portions, 22', 22". The first backplane portion 22' has a triplex input termination assembly and three input modules 22a, 22b, 22c, the second backplane portion 22" has a duplex input termination assembly 22" and two input modules 22d, 22e. The processor assembly 24 comprises a single processor backplane portion 24' having three processor modules 24a, 24b and 24c. The output assembly 26 comprises two backplane portions 26', 26". The first backplane portion 26' has a duplex output termination assembly with two output modules 26a, 26b and the second backplane portion 26" has a simplex output termination assembly with a single output module 26c.

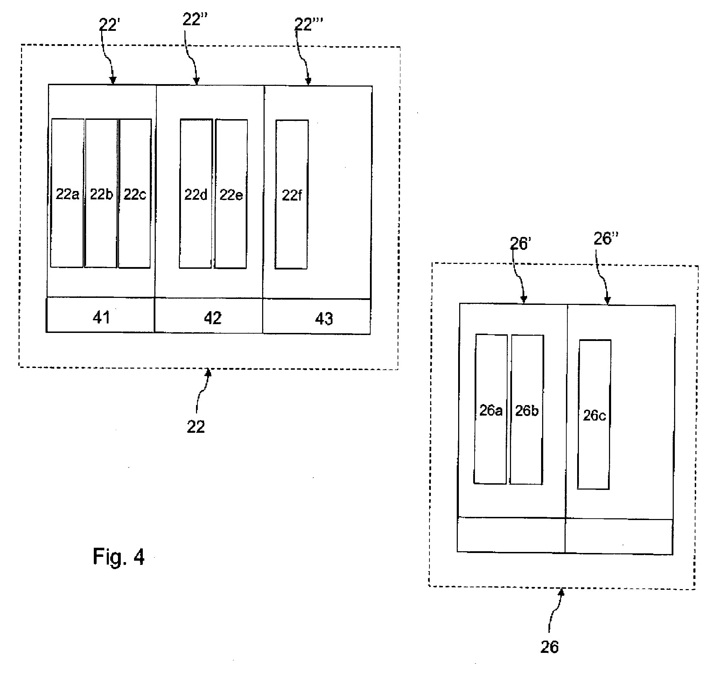

The flexibility of the input assembly 22, will now be described, in more detail with reference to Figure 4.

An input assembly 22 comprises one or more backplane portions and termination assemblies 22' 22" 22'" etc. For example, a triplex portion 22' having three modules 22a, 22b, 22c might be used for high availability requirement, a duplex portion 22" having two modules 22d, 22e might be provided for fault tolerant applications and a simplex portion 22'" with a single modules 22f might be provided for failsafe applications. The termination assemblies may be provided with different types of field conditioning circuits. For example assembly 22' may be provided with a 24V DC field conditioning circuit 41, assembly 22" may be provided with a 120V DC field conditioning circuit 42 and assembly 22'" may be provided with a 4-20mA field conditioning circuit 43. Similarly possible configurations are shown for an output assembly 26. It will be appreciated that numerous configurations of backplane portions and termination assemblies with various different numbers of modules and various different types of field conditioning circuits are possible and the invention is not limited to those shown in these examples.

Where an assembly provides more than one module for redundancy purposes it is possible to replace a failed module with a replacement module whilst the industrial process control system is operational which is also referred to herein as online replacement (i.e. replacement is possible without having to perform a system shutdown). Online replacement is not possible for a simplex assembly without interruption to the process. In this case various "hold last state" strategies may be acceptable or a sensor signal may also be routed to a different module somewhere else in the system.

The processor assembly configures a replacement processor module using data from a parallel module before the replacement module becomes active.

The field conditioning circuits 41, 42, 43 transform a signal received from a sensor monitoring industrial process control equipment to a desired voltage range, and distribute the signal to the input modules as required. Each field conditioning circuit 41, 42, 43 is also connected to field power and field return (or ground) which may be independently isolated on a channel by channel basis from all other grounds, depending on the configuration of the input termination assembly. Independent channel isolation is the preferred configuration because it is the most flexible. The field conditioning circuits 41, 42, 43 comprise simple non active parts and are not online replaceable.

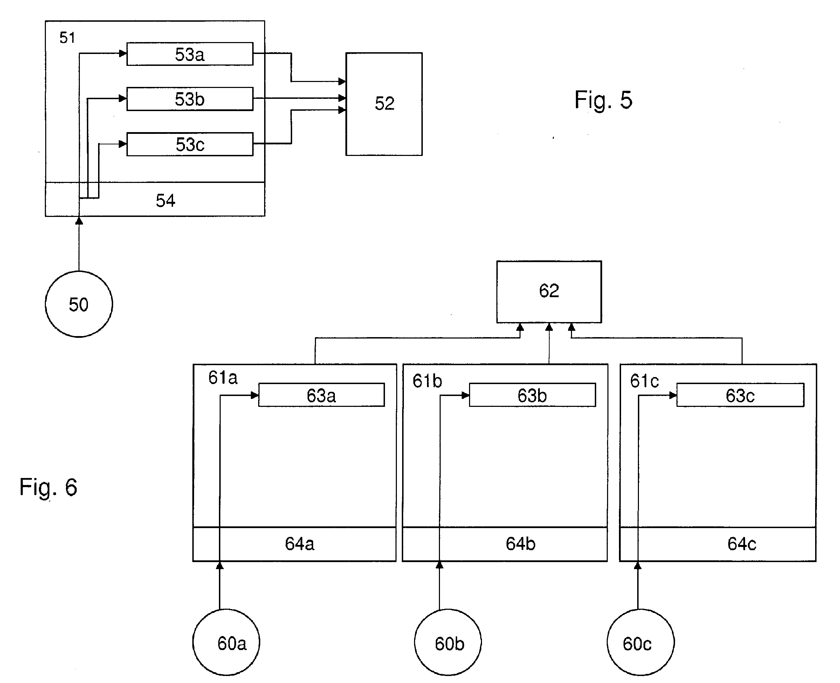

Figure 5 and Figure 6 illustrate the flexibility of the architecture described herein showing different configurations for a triplex system for generating a signal with a high availability requirement. Referring to Figure 5, a three module input assembly 51 receives a signal from a sensor 50 via a field conditioning circuit in termination assembly 54. The field conditioning circuit 54 transforms the signal to a desired voltage range and distributes the signal to three replicated input modules 53a, 53b, 53c. Each input module processes the signal and the results are sent to a two out of three voter 52 to generate a result signal in dependence thereon.

Referring to Figure 6, replicated sensors 60a, 60b, 60c each send a signal to a respective simplex assemblies 61a, 61b, 61c via respective field conditioning circuits in termination assemblies 64a, 64b, 64c. Each input module 63a, 63b, 63c processes the signal and sends an output to a two out of three voter 62 to generate a signal in dependence thereon. It will be appreciated that many variations and configurations are possible in addition to those illustrated here.

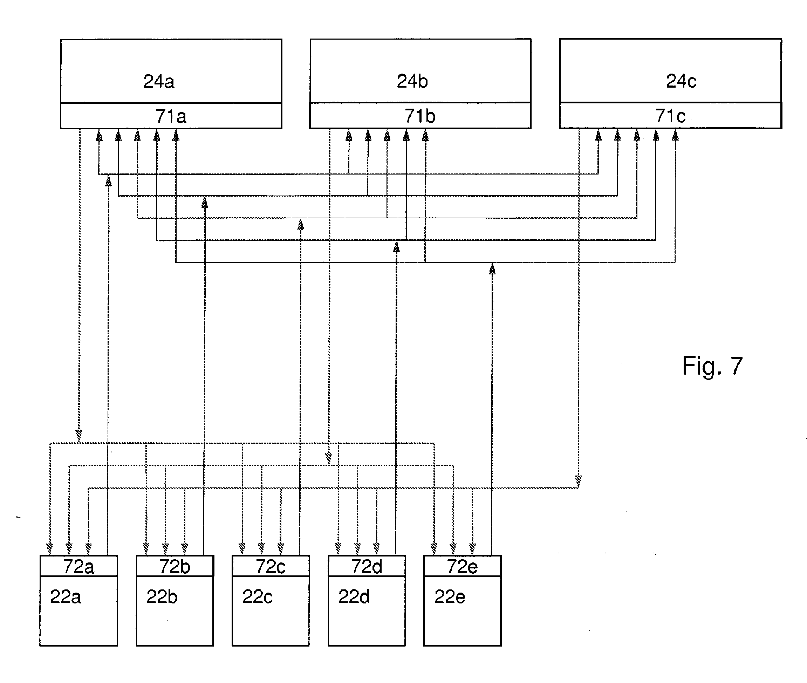

An interconnection scheme for interconnecting an array of one, two, or three processor modules 24a, 24b, 24c to an array of multiple I/O modules, 22a -22e, 26a-26c and to one or more external control networks 13 will now be described with reference to Figure 7.

The interconnection scheme comprises a topology which permits flexible system configuration to a desired level of redundancy. In configurations having more than one module per backplane portion the failure of a processor module 24a-24c or I/O module 22a -22e, 26a-26c does not affect communications links with any of the other elements of the system.

Each processor module 24a-24c possesses a single command output per I/O backplane bus, each of which can accommodate a large number of any type of I/O modules - 24 I/O modules per I/O backplane bus in the preferred embodiment of the invention. As an example, a command output is shown in Figure 7 connected to every I/O module 22a -22e on a daisy chained I/O communications backplane. A further command output is connected to I/O modules 26a-26c on an I/O communications backplane (not shown in the Figure).

Each I/O module 22a -22e, 26a-26c possesses a single response output with its own dedicated wire which is connected to every processor module 24a-24c on a processor I/O communications backplane 24.

This scheme provides three-to-many command busses combined with many-to-three response busses. The busses are unidirectional and as there is only one driver per bus there is no contention. A single fault will only result in communications loss with a single unit.

Command data is HDLC coded in the processor module 24a-24c and then NRZI encoded by the processor module interface 71a-71c, which is implemented in an FPGA in the preferred embodiment.

The command data is received and decoded by an I/O module interface 72a-72e, again implemented in an FPGA in one embodiment. Response data is encoded and transmitted by the I/O module interface 72a-72e.

This invention provides several improvements in the processor module interface 71 and the I/O module interface 72.

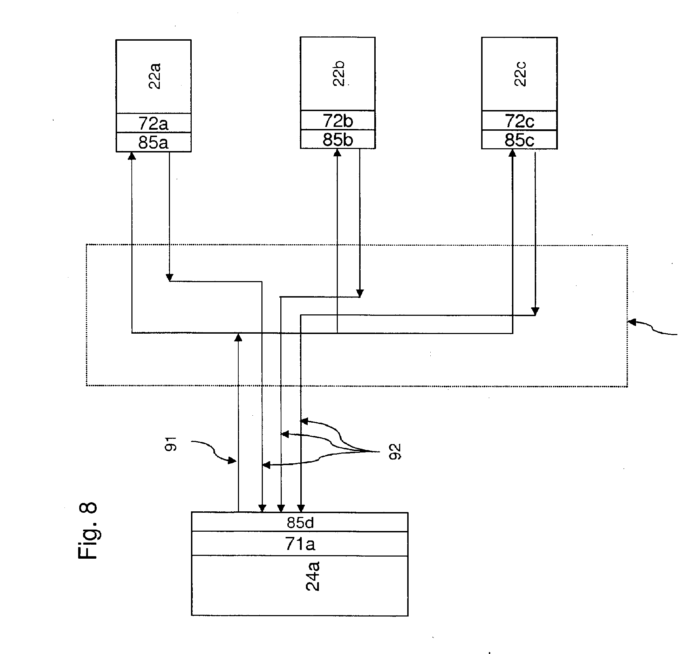

Figure 8 illustrates a portion of the arrangement shown in Figure 7 showing the interfaces in more detail. A physical interface 85a ..85d comprises a set of pins plugging the module 24a, 22a.. 22c into a backplane 28. Backplane to I/O module interface 72a .. 72c provides an interface receiving command data 91 and sending response data 92. Backplane to processor module interface 71 a provides an interface sending command data 91 and receiving response data 92. It will be appreciated that these interfaces are analogous for all processor and input/output modules.

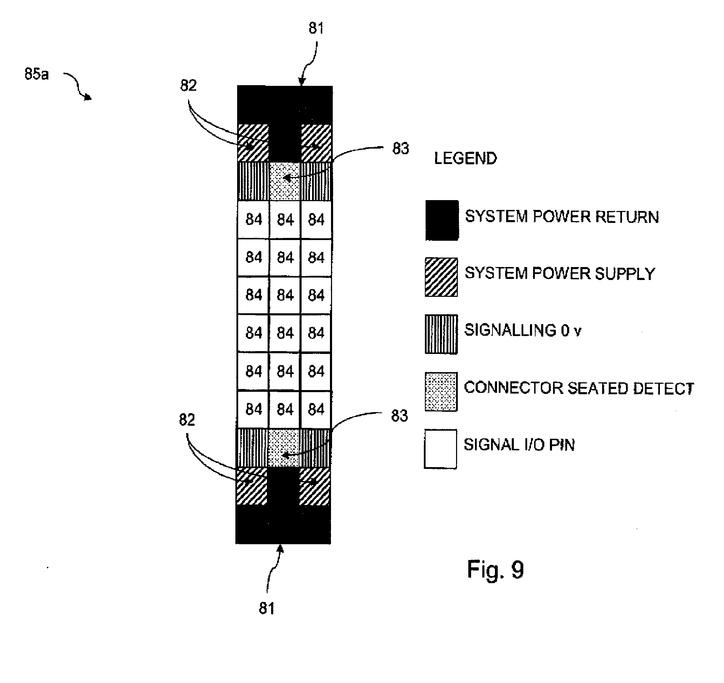

Firstly considering the physical arrangement of the pins for plugging a module into a backplane. Figure 9 illustrates an improved arrangement for a geometrical assignment of pin functionality for the physical module interface 85a..85d. Because the corners of a rectangular connector must always touch the mating half of the connector before the pins in the middle, these pins are allocated for use as system power and communications ground paths. This provides series and parallel protection on all signal and field connection pins, preventing spark damage or large transients from flowing at the moment of insertion.

Referring now to Figure 9 the pin arrangement will be discussed in more detail. Pins 81 provide system power return. These 0v pins must make contact first. Pins 82 provide system power supply.

Insertion detection pins 83 pin connects to the 0V on the backplane, but is pulled up on the input/output module itself. This pin will be at 0V only when the module is seated, allowing the module to have the ability to test whether both ends of the connector are fully seated. Remaining pins 84 are signal input output pins.

Referring back to Figure 7 if the power supply were to fail or short-circuit on one of the input modules 22a to 22f (or on one of the output modules 26 not shown in Figure 7) then it may drag down the processor module command bus for all of the other I/O modules to which it is connected.

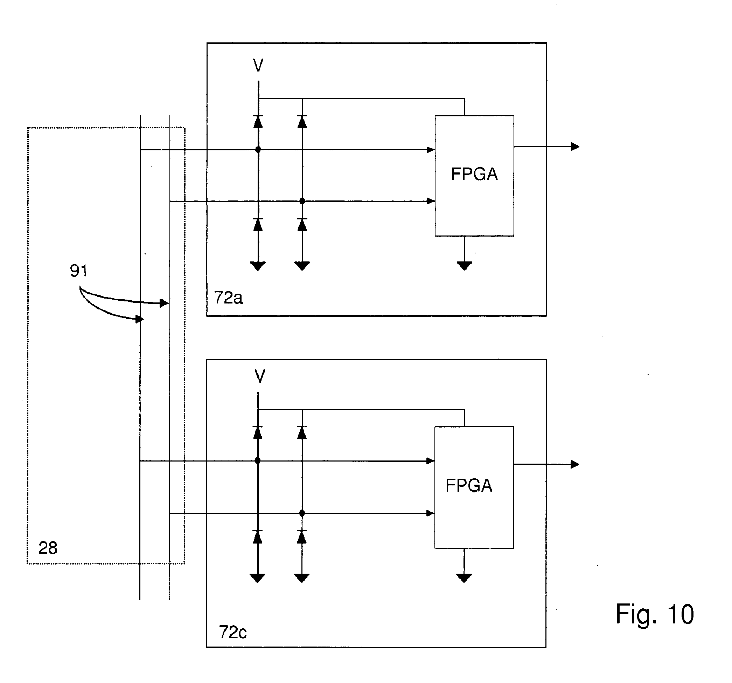

Figure 10 illustrates an improved backplane to I/O module interface 72a .. 72c provided on the input/output modules 22a .. 22c in which differential command signals 91 are biased below 700 mV to a voltage region where if unpowered, modules 22a .. 22f will retain high impedance. In this embodiment of the invention nominal voltage levels used on the backplane are as follows: Vhigh = 557 mV, Vlow = 178 mV, hence Vdiff= 379 mV. These voltage levels are designed to prevent input or output modules with failed power supplies from dragging the multi-dropped command signals from the processors module down.

By biasing the output voltage levels to remain within one silicon diode drop of 0V, the problem is mitigated, as the I/O module inputs remain high impedance for voltages in this range.

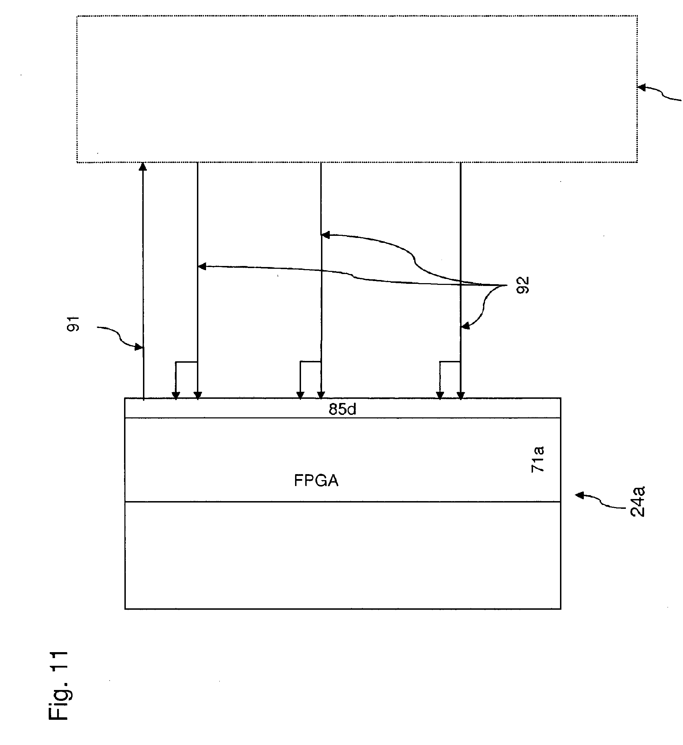

Figure 11 illustrates an improved backplane processor interface 71 a in which each input signal 92 is received on two input pins in order to allow any single channel independence fault that crosses over a pair of channels to be detected.

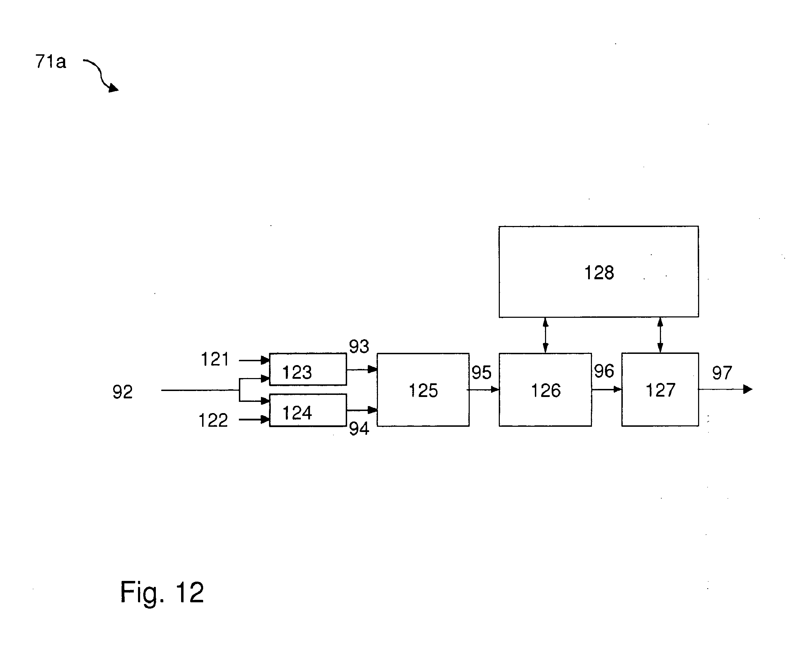

Figure 12 illustrates the backplane processor interface 71 a in more detail. The interface 71 a comprises a first threshold detector 123, a second threshold detector 124, a bit cell sampler 125, an NRZI decoder 126 and a buffer 127. A controller 128 sends and receives frame data to/from the NRZI decoder 126 and controls timing of decoded data 97 released by the buffer 127.

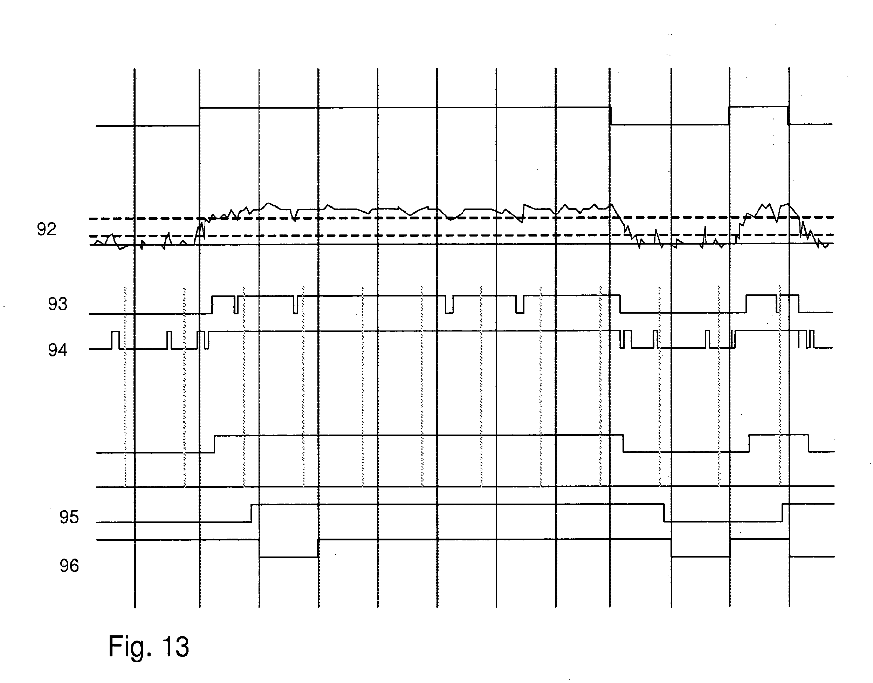

Referring now to Figure 13 which illustrates example signals at various points within the interface shown in Figure 12. Input signal 92 is duplicated and compared with a first threshold 121 by the first threshold detector 123, and with a second threshold 122 by a second threshold detector 124. A first detected threshold 93 and a second detected threshold 94 is received by the bit cell sampler 125 to generate a bit cell sampler output 95. Bit cell sample output 95 is used by the NRZI decoder to decode the data 96 which is buffered prior to output as serial data stream 97.

The arrangement described allows for an improvement in the ability to reject noise and cross-talk.

The first and second thresholds may be varied in order to obtain an optimal solution for the particular signal characteristics observed.

It will be seen that the incoming signal is provided with an additional layer of glitch protection in the event that noise falls within the bounds of one of the thresholds. This allows a simple form of digital hysteresis to be employed. Additional traditional glitch filtering may be added subsequent to the front end stage.

This arrangement allows marginal signal levels to be detected and rejected. It also allows the signalling thresholds to be optimized to improve the signal to noise ratio for the incoming response signals.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately, or in any suitable combination.

It is to be recognized that various alterations, modifications, and/or additions may be introduced into the constructions and arrangements of parts described above without departing from the scope of the present invention as defined in the appended claims.

## Claims

1. An apparatus for industrial process control comprising a plurality of assemblies (22, 24, 26) in communication with one another via a backplane portion, each assembly having a physical module interface (85a-85d) comprising a plurality of input/output pins (81, 82, 83, 84) for connecting to the backplane portion and in which the assemblies (22, 24, 26) use one or more differential signals to communicate with one another and in which the backplane portion is arranged to connect an input signal to two input pins (84) on the physical module interface (85a-85d) of one of the plurality of assemblies (22, 24, 26) to provide a first and second copy of the input signal to said assembly (22, 24, 26).

2. The apparatus of claim 1, in which the assembly (22, 24, 26) comprises a module interface (71 a) for processing said first and second copy of an input signal (92), the module interface (71 a) comprising:
a first threshold detector (123) arranged to receive said first copy of the input signal (92) and arranged to output a signal (93) in dependence upon a first threshold;
a second threshold detector (124) arranged to receive said second copy of the input signal (92) and arranged to output a signal (94) in dependence upon a second threshold; and
a bit sampler (125) arranged to receive and sample the output of the first and second threshold detectors (123, 124) and to provide a signal (95) dependent thereon for subsequent decoding.

3. The apparatus of claim 1 in which one of the plurality of assemblies (22, 24, 26) comprises an interface (72a-72c) for processing input signals the interface (72a-72c) comprising means for biasing the input signal to within a predetermined range.

4. The apparatus of claim 3 in which the means for biasing comprises a pair of silicon diodes.

5. The apparatus of claim 1 in which the plurality of input/output pins (81, 82, 83, 84) are arranged in a longitudinal group and comprising a first seat detect pin (83) at a first end of the longitudinal group and a second seat detect pin (83) at a second end of the longitudinal group.

6. The apparatus of claim 5, in which each seat detect pin (83) is pulled up to a predetermined voltage when the assembly is disconnected from the backplane and in which each seat detect pin (83) connects to 0V on the backplane when the assembly is connected to the backplane.

7. The apparatus of claim 5, In which the longitudinal group comprises a system power supply pin (82) and a system power return pin (81) at the first end of the longitudinal group and a system power supply pin (82) and a system power return pin (81) at the second end of the longitudinal group.

8. The apparatus of claim 7, wherein the longitudinal group is arranged so as to ensure that at least one system power return pin (81) connects to the backplane portion before other input pins (82, 83, 84) in the longitudinal group.

9. The apparatus of claim 7 or claim 8 wherein the longitudinal group comprises a system power return pin (81) at each corner of the longitudinal group.

## Patentansprüche

1. Vorrichtung für industrielle Prozesssteuerung, eine Vielzahl von Baugruppen (22, 24, 26) umfassend, die über ein Backplane-Teil miteinander in Kommunikation stehen, wobei jede Baugruppe eine physikalische Modulschnittstelle (85a-85d) hat, die eine Vielzahl von Eingangs/Ausgangs-Pins (81, 82, 83, 84) umfasst, um an das Backplane-Teil anzuschließen, und worin die Baugruppen (22, 24, 26) ein oder mehrere differenzielle Signale verwenden, um miteinander zu kommunizieren und worin das Backplane-Teil dazu angeordnet ist, ein Eingangssignal an zwei Eingangs-Pins (84) auf der physikalischen Modulschnittstelle (85a-85d) von einer der Vielzahl von Baugruppen (22, 24, 26) anzuschließen, um der Baugruppe (22, 24, 26) eine erste und zweite Kopie des Eingangssignals bereitzustellen.

2. Vorrichtung nach Anspruch 1, worin die Baugruppe (22, 24, 26) eine Modulschnittstelle (71a) zum Verarbeiten der ersten und zweiten Kopie eines Eingangssignals (92) umfasst, wobei die Modulschnittstelle (71a) umfasst:
einen ersten Schwellendetektor (123), dazu angeordnet, die erste Kopie des Eingangssignals (92) zu empfangen, und dazu angeordnet, ein Signal (93) in Abhängigkeit von einer ersten Schwelle auszugeben;
einen zweiten Schwellendetektor (124), dazu angeordnet, die zweite Kopie des Eingangssignals (92) zu empfangen und dazu angeordnet, ein Signal (94) in Abhängigkeit von einer zweiten Schwelle auszugeben; und
einen Bit-Abtaster (125), dazu angeordnet, die Ausgabe der ersten und zweiten Schwellendetektoren (123, 124) zu empfangen und abzutasten und ein davon abhängiges Signal (95) zum anschließenden Decodieren bereitzustellen.

3. Vorrichtung nach Anspruch 1, worin eine der Vielzahl von Baugruppen (22, 24, 26) eine Schnittstelle (72a-72c) umfasst, um Eingangssignale zu verarbeiten, wobei die Schnittstelle (72a-72c) Mittel zum Biasing des Eingangssignals bis innerhalb eines vorgegebenen Bereichs umfasst.

4. Vorrichtung nach Anspruch 3, worin das Mittel zum Biasing ein Paar Silicium-Dioden umfasst.

5. Vorrichtung nach Anspruch 1, worin die Vielzahl von Eingangs-Ausgangs-Pins (81, 82, 83, 84) in einer longitudinalen Gruppe angeordnet sind und einen ersten Auflagedetektions-Pin (83) an einem ersten Ende der longitudinalen Gruppe und einen zweiten Auflagedetektions-Pin (83) an einem zweiten Ende der longitudinalen Gruppe umfassen.

6. Vorrichtung nach Anspruch 5, worin jeder Auflagedetektions-Pin (83) auf eine vorgegebene Spannung hochgezogen wird, wenn die Baugruppe vom Backplane gelöst wird, und worin jeder Auflagedetektions-Pin (83) an 0V auf dem Backplane anschließt, wenn die Baugruppe an das Backplane angeschlossen wird.

7. Vorrichtung nach Anspruch 5, worin die longitudinale Gruppe einen System-Stromversorgungs-Pin (82) und einen System-Stromrückführungs-Pin (81) am ersten Ende der longitudinalen Gruppe und einen System-Stromversorgungs-Pin (82) und einen System-Stromrückführungs-Pin (81) am zweiten Ende der longitudinalen Gruppe umfasst.

8. Vorrichtung nach Anspruch 7, worin die longitudinale Gruppe angeordnet ist, um sicherzustellen, dass mindestens ein System-Stromrückführungs-Pin (81) an das Backplane-Teil vor anderen Eingangs-Pins (82, 83, 84) in der longitudinalen Gruppe anschließt.

9. Vorrichtung nach Anspruch 7 oder Anspruch 8, worin die longitudinale Gruppe einen System-Stromrückführungs-Pin (81) an jeder Ecke der longitudinalen Gruppe umfasst.

## Revendications

1. Appareil pour une commande de procédé industriel comprenant une pluralité d'ensembles (22, 24, 26) en communication les uns avec les autres par l'intermédiaire d'une partie arrière-plan, chaque ensemble présentant une interface de module physique (85a à 85d) comprenant une pluralité de broches entrée/sortie (81, 82, 83, 84) permettant un raccordement à la partie arrière-plan et dans lequel les ensembles (22, 24, 26) utilisent un ou plusieurs signaux différentiels afin de communiquer les uns avec les autres et dans lequel la partie arrière-plan est agencée afin de raccorder un signal d'entrée à deux broches d'entrée (84) sur l'interface de module physique (85a à 85d) d'un parmi la pluralité d'ensembles (22, 24, 26) afin de fournir des première et seconde copies du signal d'entrée audit ensemble (22, 24, 26).

2. Appareil selon la revendication 1, dans lequel l'ensemble (22, 24, 26) comprend une interface de module (71a) permettant de traiter lesdites première et seconde copies d'un signal d'entrée (92), l'interface de module (71a) comprenant :
un premier détecteur de seuil (123) conçu pour recevoir ladite première copie du signal d'entrée (92) et conçu pour produire un signal (93) en fonction d'un premier seuil ;
un second détecteur de seuil (124) conçu pour recevoir ladite seconde copie du signal d'entrée (92) et conçu pour produire un signal (93) en fonction d'un second seuil ; et
un échantillonneur de bit (125) conçu pour recevoir et échantillonner la sortie des premier et second détecteurs de seuil (123, 124) et pour fournir un signal (95) en fonction de celui-ci en vue d'un décodage ultérieur.

3. Appareil selon la revendication 1, dans lequel un parmi la pluralité d'ensembles (22, 24, 26) comprend une interface (72a à 72c) permettant de traiter des signaux d'entrée, l'interface (72a à 72c) comprenant un moyen permettant de polariser le signal d'entrée jusque dans une plage prédéterminée.

4. Appareil selon la revendication 3, dans lequel le moyen permettant de polariser comprend une paire de diodes au silicium.

5. Appareil selon la revendication 1, dans lequel la pluralité de broches entrée/sortie (81, 82, 83, 84) sont agencées en un groupe longitudinal, et comprenant une première broche de détection de situation (83) au niveau d'une première extrémité du groupe longitudinal et une seconde broche de détection de situation (83) au niveau d'une seconde extrémité du groupe longitudinal.

6. Appareil selon la revendication 5, dans lequel chaque broche de détection de situation (83) est rappelée à une tension prédéterminée lorsque l'ensemble est déconnecté de l'arrière-plan et dans lequel chaque broche de détection de situation (83) se connecte à 0V sur l'arrière-plan lorsque l'ensemble est connecté à l'arrière plan.

7. Appareil selon la revendication 5, dans lequel le groupe longitudinal comprend une broche (82) d'alimentation en énergie du système et une broche (81) de renvoi d'énergie du système au niveau de la première extrémité du groupe longitudinal et une broche (82) d'alimentation en énergie du système et une broche (81) de renvoi d'énergie du système au niveau de la seconde extrémité du groupe longitudinal.

8. Appareil selon la revendication 7, dans lequel le groupe longitudinal est conçu de manière à garantir qu'au moins une broche (81) de renvoi d'énergie du système est raccordée à la partie arrière-plan avant d'autres broches d'entrée (82, 83, 84) du groupe longitudinal.

9. Appareil selon la revendication 7 ou 8, dans lequel le groupe longitudinal comprend une broche (81) de renvoi d'énergie du système à chaque coin du groupe longitudinal.
